# EUROPEAN PATENT APPLICATION

(11) **EP 4 497 785 A1**
(43) Date of publication of application: **29.01.2025**
(21) Application number: 23774934.6
(22) Date of filing: 22.03.2023
(51) Int. Cl.: C08L 83/04, B32B 27/00, B32B 27/18, B32B 27/20, C01B 33/18, C08G 77/04, C08J 9/00, C08K 3/36, C08L 29/04, C09D 7/61, C09D 129/04, C09D 183/02

(54) **COMPOSITION, FILM, LAMINATE, AND OPTICAL MEMBER**

(30) Priority: 22.03.2022 JP 2022045627
(71) Applicant: Mitsubishi Chemical Corporation, Tokyo 100-8251 (JP)
(72) Inventor: TAKAKI, Atsushi, Tokyo 100-8251 (JP); SAKUMA, Satoshi, Tokyo 100-8251 (JP); TSUJIMOTO, Takayuki, Tokyo 100-8251 (JP)
(74) Representative: Hoffmann Eitle
(86) International application number: PCT/JP2023/011166
(87) International publication number: WO 2023/182339

(57) **Abstract**

Provided are: a composition that can yield a highly flexible film inhibiting occurrence of cracking and peeling in a dicing process; and a film, a laminate, and an optical member obtained with the composition. The composition includes chain silica fine particles, an alkoxysilane hydrolyzed condensate, and a hydrophilic resin.

## Description

### Technical Field

The present invention relates to a composition, a film, a laminate, and an optical member.

### Background Art

Porous silicon oxide films have properties such as a low refractive index, transparency, and electric insulation property, and are widely used in the industries. In particular, practical use has been investigated in application fields utilizing the low refractive index for an antireflective film for an electronic device display, an automobile panel, a lamp for illumination, a sunlight-using device, a camera lens, a face shield, glasses, etc., an optical waveguide, and a clad layer for an optical fiber.

For example, Patent Literature 1 discloses a method for manufacturing a binder liquid for forming a silicon oxide thin film, which is suitable for forming a porous silicon oxide thin film having excellent substrate adhesiveness. Patent Literature 1 also proposes a method for manufacturing a coating liquid for forming a silicon oxide thin film, the method including mixing: a binder liquid for forming a silicon oxide thin film composed of a reaction product in which a hydrolysable silane compound is hydrolyzed and subjected to a condensation reaction; and silica fine particles.

Patent Literature 2 proposes a porous silicon oxide film having an excellent antifogging property.

### Citation List

### Patent Literature

Patent Literature 1
   Japanese Patent Laid-Open No. 2019-23269
Patent Literature 2
   Japanese Patent Laid-Open No. 2021-182134

### Summary of Invention

### Technical Problem

However, the porous silicon oxide film described in Patent Literature 1 and 2 may cause cracking or peeling in the dicing process after the laminating the porous silicon oxide film to a substrate.

The present invention has been made in view of the above problem, and an object of the present invention is to provide a composition that can yield a highly flexible film inhibiting occurrence of cracking and peeling in the dicing process, and a film, a laminate, and an optical member that are obtained with the composition.

### Solution to Problem

The present inventors have made intensive investigation to solve the above problem, and consequently found that a film of a composition containing chain silica fine particles, an alkoxysilane hydrolyzed condensate, and a hydrophilic resin yields high flexibility and can inhibit cracking and peeling in the dicing process. This finding has led to completion of the present invention.

Specifically, the gist of the present invention is as follows.
[1] A composition, comprising: chain silica fine particles; an alkoxysilane hydrolyzed condensate; and a hydrophilic resin.
[2] The composition according to the [1], wherein the hydrophilic resin has a hydroxyl group.
[3] The composition according to the [1] or [2], wherein a content of a hydroxyl group directly bonded to a main chain of the hydrophilic resin is 35 mol% or less.
[4] The composition according to any one of the [1] to [3], wherein a content of the hydrophilic resin is more than 1 part by mass relative to 100 parts by mass of a total amount of the chain silica fine particles and the alkoxysilane hydrolyzed condensate.
[5] The composition according to any one of the [1] to [4], wherein a content of the alkoxysilane hydrolyzed condensate is 5 to 30 mass% relative to 100 mass% of a total amount of the chain silica fine particles, the alkoxysilane hydrolyzed condensate, and the hydrophilic resin.
[6] The composition according to any one of the [1] to [5], wherein a content of the chain silica fine particles is 60 to 90 mass% relative to 100 mass% of a total amount of the chain silica fine particles, the alkoxysilane hydrolyzed condensate, and the hydrophilic resin.
[7] The composition according to any one of the [1] to [6], wherein the alkoxysilane hydrolyzed condensate has a weight-average molecular weight of 1,000 to 5,000.
[8] The composition according to any one of the [1] to [7], wherein the chain silica fine particles have an average primary-particle diameter of 5 to 100 nm.
[9] The composition according to any one of the [1] to [8], wherein the hydrophilic resin has an average polymerization degree of 200 to 2,000.
[10] A film, comprising the composition according to any one of the [1] to [9].
[11] A film, comprising a hydrophilic resin, wherein the film has a porosity of 10 to 80%.
[12] The film according to the [10], wherein the film has a thickness of 3,000 nm to 20,000 nm.
[13] The film according to the [10] or [12], wherein the film has a porosity of 10 to 80%.
[14] The film according to any one of the [10] to [13], wherein the film has a refractive index of 1.15 to 1.40.
[15] The film according to any one of the [10] to [14], wherein the film has a pore size of 0.1 to 50 nm.
[16] A laminate of the film according to any one of the [10] to [15] and a substrate.
[17] The laminate according to the [16], wherein the substrate is glass.
[18] An optical member, comprising the laminate according to the [17].

### Advantageous Effect of Invention

As noted above, the composition of the present invention adopts the configuration of containing the chain silica fine particles, the alkoxysilane hydrolyzed condensate, and the hydrophilic resin.

This configuration can provide the highly flexible film and laminate that can inhibit occurrence of cracking and peeling in dicing.

### Description of Embodiments

Hereinafter, the composition, the film, and the laminate according to the present invention will be described in detail with showing embodiments thereof, but the present invention is not limited by the following description. Embodiments other than the following examples may be appropriately modified and employed for use within a range not impairing the spirit of the present invention.

Note that the expression "to" herein is used as a meaning of including numerical values described before and after "to" as a lower limit and an upper limit.

### [Composition]

Components in the composition of the present invention will be described in detail hereinafter.

The composition of the present invention contains chain silica fine particles, an alkoxysilane hydrolyzed condensate, and a hydrophilic resin.

With formation by using the composition of the present invention, a film, which is a formed product, can be manufactured. Laminating the film on a substrate can yield a laminate. Accordingly, for example, the flexibility of the film is improved and occurrence of cracking and peeling can be inhibited in a dicing process for fitting the laminate to a product size, and thereby the product having excellent adhesiveness to the substrate and bendability and having an excellent refractive index for optical use is obtained.

The aspect of the composition of the present invention is not particularly limited, and may be liquid or solid. Representative examples thereof include the following two aspects:
(I) A coating liquid containing the chain silica fine particles, the hydrophilic resin, the alkoxysilane hydrolyzed condensate, and a solvent; and
(II) A film containing the chain silica fine particles, the hydrophilic resin, and the alkoxysilane hydrolyzed condensate.

### [Chain Silica Fine Particles]

The chain silica fine particles refer to a material in which a plurality of primary particles are directly bonded with a chemical bond such as a siloxane bond to be continued and form a chain via no bonding moiety composed of another material. The chain may have a linearly straightened shape, or may have a two-dimensionally or three-dimensionally curved shape. The chain silica fine particles are preferably silica fine particles having an average primary-particle diameter of, for example, about 5 to 30 nm and continued to have an average length of about 30 to 200 nm. The shape of the chain silica fine particles can be observed with an electron microscope (such as an SEM). The average primary-particle diameter typically refers to a value given from a specific surface area (m²/g) measured by a nitrogen adsorption method (BET method) with a formula "average primary-particle diameter = (2720 / specific surface area)". The average length can be measured by a dynamic light scattering method.

Since having large interparticle gaps in a stacked state, such chain silica fine particles can reduce the refractive index of the film. Meanwhile, if only silica particles other than the chain silica fine particles, for example, spherical silica particles, are used, a large amount of the spherical silica particles are necessarily blended in order to reduce the refractive index. In this case, a content proportion of a matrix structure other than the spherical silica particles becomes small, and thereby a haze increases to considerably deteriorate appearance. In the present invention, use of the chain silica fine particles can achieve both the low refractive index and excellent appearance.

The average primary-particle diameter of the chain silica fine particles is preferably 6 nm or more, and more preferably 7 nm or more. Setting the average primary-particle diameter of the chain silica fine particles to 6 nm or more can reduce the refractive index of the film. Meanwhile, the average primary-particle diameter of the chain silica fine particles is preferably 100 nm or less, preferably 50 nm or less, and more preferably 30 nm or less. Setting the average primary-particle diameter of the chain silica fine particles to 100 nm or less can easily form the film having a desired thickness, and can reduce roughness and light scattering on the film surface to reduce a haze.

Specific examples of the chain silica fine particles include colloidal silica such as: "SNOWTEX(R)-OUP" (average length: 40 to 100 nm), "SNOWTEX(R)-UP" (average length: 40 to 100 nm), "SNOWTEX(R) PS-M" (average length: 80 to 150 nm), "SNOWTEX(R) PS-MO" (average length: 80 to 150 nm), "SNOWTEX(R) PS-S" (average length: 80 to 120 nm), "SNOWTEX(R) PS-SO" (average length: 80 to 120 nm), "IPA-ST-UP" (average length: 40 to 100 nm), "MEK-ST-UP" (average length: 40 to 100 nm), and "PGME-ST-UP" (average length: 40 to 100 nm), which are manufactured by Nissan Chemical Industries, Ltd.; and "Fine Cataloid F-120", manufactured by JGC Catalysts and Chemicals Ltd. A derivative in which the solvent is substituted as necessary is preferably used in some cases. As a commercially available dispersion medium, methyl ethyl ketone, methyl isobutyl ketone, propylene glycol monomethyl ether, propylene glycol monomethyl ether acetate, etc. are known. These dispersion media may be appropriately replaced to another component according to use.

A content of the chain silica fine particles is preferably 60 to 90 mass% as a proportion relative to 100 mass% of a total amount of the chain silica fine particles, the alkoxysilane hydrolyzed condensate, and the hydrophilic resin ("a mass of the chain silica fine particles" / "a mass of the chain silica fine particles + a mass of the alkoxysilane hydrolyzed condensate + a mass of the hydrophilic resin"). When the content of the chain silica fine particles is 60 mass% or more, a porosity in the film becomes large, and thereby the refractive index can be reduced. The content is more preferably 65 mass% or more, and particularly preferably 70 mass% or more. Meanwhile, when the content is 90 mass% or less, adhesiveness to the substrate and mechanical strength of the film are more improved. The content is more preferably 85 mass% or less, and particularly preferably 80 mass% or less.

### [Alkoxysilane Hydrolyzed Condensate]

The alkoxysilane hydrolyzed condensate contained in the composition of the present invention is a compound having a siloxane bond, and a compound in which an alkoxysilane is hydrolyzed and condensed. A method for manufacturing the alkoxysilane hydrolyzed condensate is not particularly limited, and the alkoxysilane hydrolyzed condensate is composed of a hydrolysable silane compound and a polymer of the hydrolysable silane compound, and typically manufactured by using water and an organic solvent. This composition manufactured from the hydrolysable silane compound or the polymer of the hydrolysable silane compound, water, and the organic solvent is referred to as "silicate oligomer".

The alkoxysilane hydrolyzed condensate of the present invention preferably has a weight-average molecular weight of 1,000 to 5,000. When the alkoxy hydrolyzed condensate has a weight-average molecular weight of 1,000 or more, the silicate oligomer containing the alkoxy hydrolyzed condensate hardly gels to yield good storage stability. The weight-average molecular weight is more preferably 1,500 or more, and particularly preferably 2,000 or more. The weight-average molecular weight of 5,000 or less yields better adhesiveness to the substrate to inhibit cracking and peeling in dicing. The weight-average molecular weight is more preferably 4,000 or less, and particularly preferably 3,000 or less. Such a weight-average molecular weight corresponds to a polymer having an average polymerization degree "n" of 2 to 100.

The above weight-average molecular weight is a value measured by gel permeation chromatography (GPC) under the following condition.
Solvent: tetrahydrofuran
Device name: TOSOH HLC-8220GPC
Column: TOSOH TSKgel Super HM-N (two columns) and HZ1000 (one column) are connected for use
Column temperature: 40°C
Sample concentration: 0.01 mass%
Flow rate: 0.6 ml/min
Calibration curve: PEG (used is a calibration curve with a four-point tertiary approximate expression of molecular weights of 20,000, 4,000, 1,000, and 200.)

A concentration of the alkoxy hydrolyzed condensate in the silicate oligomer is preferably 15 mass% or less, more preferably 10 mass% or less, and particularly preferably 8 mass% or less. When the concentration of the alkoxy hydrolyzed condensate is 15 mass% or less, stability of the solution is improved to more improve dispersibility in mixing with the chain silica fine particles. Meanwhile, the concentration of the alkoxy hydrolyzed condensate in the silicate oligomer is preferably 0.1 mass% or more, and more preferably 0.2 mass% or more in terms of efficiency of the film shape.

Such a silicate oligomer is transparent, and a turbidity as a measurement result by using a kaolin turbidity meter is typically 10 or less.

The organic solvent contained in the silicate oligomer is preferably a hydrophilic solvent. The hydrophilic solvent is not particularly limited, and alcohols such as methanol, ethanol, propanol, and butanol, cellosolves such as ethyl cellosolve, butyl cellosolve, and propyl cellosolve, and glycols such as ethylene glycol, propylene glycol, and hexylene glycol are typically used. These solvents may be used singly, or two or more thereof may be mixed for use.

A content of the organic solvent in the silicate oligomer is not particularly limited, and typically 40 mass% to 99 mass%.

The hydrolysable silane compound is a silane compound having a hydrolysable group such as an alkoxy group, an alkoxyalkoxy group, an acyloxy group, an aryloxy group, an aminoxy group, an amide group, a ketoxime group, an isocyanate group, and a halogen atom. As the hydrolysable silane compound, monofunctional to tetrafunctional compounds, which depends on a number of the hydrolysable groups are known.

In the present invention, the alkoxysilane compound is preferably used as the hydrolysable silane compound. Examples of an alkyl group in the alkoxy group (-OR) include lower alkyl groups such as a methyl group, an ethyl group, a propyl group, and a butyl group.

Representative examples of the alkoxysilane compound include dimethyldimethoxysilane (DMDMS), methyltrimethoxysilane (MTMS), tetramethoxysilane (TMOS), dimethyldiethoxysilane (DMDES), methyltriethoxysilane (MTES), and tetraethoxysilane (TEOS). A commercially available product of dimethyldimethoxysilane (DMDMS) is typically a solution with 99 mass% purity.

The polymer of the hydrolysable silane compound is a material in which the monomer as above is polymerized (oligomerized) with condensation. In this reaction, a silanol group (-Si-OH) is firstly formed due to hydrolysis of the alkoxy group. An alcohol (R-OH) is simultaneously formed. Subsequently, the siloxane bonds (-Si-O-Si-O-) are formed due to (dehydrative) condensation of the silanol groups, and this condensation is repeated to form the siloxane oligomer. The polymer of the alkoxysilane compound is preferably a polymer of tetramethoxysilane in which R represents a methyl group or a polymer of tetraethoxysilane in which R represents an ethyl group in terms of the hydrolysis ability and condensation ability of the alkoxy group.

The structure of the polymer includes linear, branched, cyclic, and network structures. The polymer of a tetraalkoxysilane having a linear structure is represented by the following general formula (I).

RO(Si(OR)₂O)ₙR ... (I)

In the general formula (I), R represents an alkyl group, and "n" represents a polymerization degree of the polymer. The typically available polymer is a composition of polymers having different "n", and therefore has molecular weight distribution. Note that the polymerization degree is represented by an averaged "n".

The polymerization degree of the tetrafunctional hydrolysable silane compound such as a tetraalkoxysilane or a polymer thereof may be represented as "silica content". The term "silica content" refers to a mass proportion of silica (SiO₂) generated from the compound, and obtained by measuring an amount of silica generated by stably hydrolyzing and calcining the compound. The "silica content" indicates a proportion of the generated silica per molecule of the compound, and is a value calculated with the following general formula (II). Silica content (parts by mass) = Polymerization degree × Molecular weight of SiO2 / Molecular weight of compound

In the present invention, a polymer having a polymerization degree "n" of typically 2 to 100, preferably 2 to 70, and further preferably 2 to 50 is used. For such a polymer, use of a commercially available product is convenient. As the polymerization degree "n" becomes large, the molecular weight of the generated alkoxysilane hydrolyzed condensate increases, the molecular weight distribution becomes wide, and the viscosity becomes high.

Examples of the commercially available polymer of the hydrolysable silane compound include: MKC Silicate MS51, MKC Silicate MS56, MKC Silicate MS57, and MKC Silicate MS56S, which are manufactured by Mitsubishi Chemical Corporation (the all are polymers of tetramethoxysilane); Methyl Silicate 51 (polymer of tetramethoxysilane), Methyl Silicate 53A, Ethyl Silicate 40, and Ethyl Silicate 48, which are manufactured by COLCOAT CO., LTD.; and Ethyl Silicate 40 and Silicate 45, which are manufactured by TAMA CHEMICALS CO., LTD. (the all are polymers of tetraethoxysilane).

The alkoxysilane hydrolyzed condensate of the present invention preferably contains the bifunctional hydrolysable silane compound and the polymer of the hydrolysable silane compound, and is preferably manufactured by using a hydrolysable silane composition containing the polymer of the hydrolysable silane compound at a content of 50 mass% or more. The proportion of the polymer in this hydrolysable silane composition is preferably 70 mass% or more. When the proportion of the polymer in the hydrolysable silane composition is 70 mass% or more, the branched, cyclic, and network structures are appropriately formed in the reacted composition, and the adhesiveness between the film and the substrate is more improved. The proportion is more preferably 75 mass% or more.

Meanwhile, the proportion of the polymer in the hydrolysable silane composition is preferably 90 mass% or less. When the proportion of the polymer in the hydrolysable silane composition is 90 mass% or less, the composition hardly gels to more improve the storage stability.

A proportion of the bifunctional hydrolysable silane compound being a monomer in the hydrolysable silane composition is preferably 10 mass% or more and 30 mass% or less. When the proportion of the bifunctional hydrolysable silane compound is 10 mass% or more, the silicate oligomer containing the obtained alkoxysilane hydrolyzed condensate hardly gels to have more excellent stability. Meanwhile, when the proportion is 30 mass% or less, coatability during the film formation becomes more excellent. This proportion is more preferably 25 mass% or less.

The conditions of the hydrolysis and condensation reactions are preferably conditions described in Japanese Patent Laid-Open No. 2021-182134. In this reaction, an aqueous solution of an acid catalyst is continuously added dropwise into a hydrophilic solvent solution in which the above hydrolysable silane composition is dissolved under a stirring condition.

A content of the alkoxysilane hydrolyzed condensate is preferably 5 to 30 mass% as a proportion relative to a total amount of the chain silica fine particles, the alkoxysilane hydrolyzed condensate, and the hydrophilic resin ("a mass of the alkoxysilane hydrolyzed condensate" / "a mass of the chain silica fine particles + a mass of the alkoxysilane hydrolyzed condensate + a mass of the hydrophilic resin"). If the proportion of the alkoxysilane hydrolyzed condensate is excessively low, the film formability deteriorates. If the proportion of the alkoxysilane hydrolyzed condensate is excessively high, the refractive index of the film increases. The content of the alkoxysilane hydrolyzed condensate is more preferably 5 to 25 mass%, and further preferably 5 to 20 mass%.

### [Hydrophilic Resin]

The composition of the present invention contains the hydrophilic resin. The hydrophilic resin suitably used in the present invention refers to a resin with solubility of 5 mass% or more in water, methanol, and ethanol. When the solubility is 5 mass% or more, compatibility with the chain silica fine particles and the alkoxysilane hydrolyzed condensate becomes better, and a haze of the film is reduced to yield more excellent appearance. The solubility is preferably 8 mass% or more, and further preferably 10 mass% or more.

Examples of the hydrophilic resin include natural polymers, water-soluble resins, and resin emulsions. Examples of the specific hydrophilic resin used for the composition of the present invention include casein, soybean protein, starch, and gelatin as examples of the natural polymers.

Examples of the water-soluble resin include, as a resin having a hydroxyl group as a hydrophilic structural unit, polyvinyl alcohol resin (PVA), cellulose resins (such as methylcellulose (MC), ethylcellulose (EC), hydroxyethylcellulose (HEC), and carboxymethylcellulose (CMC)), chitins, and starch. Examples of a resin having an ether bond include polyethylene oxide (PEO), polypropylene oxide (PPO), polyethylene glycol (PEG), and polyvinyl ether (PVE). Examples of a resin having an amide group or an amide bond include polyacrylamide (PAAM) and polyvinylpyrrolidone (PVP).

Examples of the resin emulsion include: conjugated diene polymer emulsions of a styrene-butadiene copolymer and methyl methacrylate-butadiene copolymer; acrylic polymer emulsions; vinyl polymer emulsions such as an ethylene-vinyl acetate copolymer; ester polymer emulsions, urethane polymer emulsions, olefin polymer emulsions, epoxy polymer emulsions, and vinylidene chloride polymer emulsions.

The hydrophilic resin of the present invention is preferably the resin having a hydroxyl group. The resin having a hydroxyl group has better compatibility with the chain silica fine particles and the alkoxysilane hydrolyzed condensate, and a haze of the film is reduced to yield more excellent appearance.

Examples of such a hydrophilic resin include polyvinyl alcohol resin (PVA), cellulose resins (such as methylcellulose (MC), ethylcellulose (EC), hydroxyethylcellulose (HEC), and carboxymethylcellulose (CMC)), chitins, and starch.

A content of a hydroxyl group directly bonded to a main chain of the hydrophilic resin is preferably 35 mol% or less. When the content of a hydroxyl group is within the above range, the film formability and flexibility of the film, and the dicing property becomes good.

The content of the hydroxyl group is more preferably 32 mol% or less, more preferably 30.8 mol% or less, and further preferably 30 mol% or less. Meanwhile, the content of a hydroxyl group is preferably 5 mol% or more, more preferably 10 mol% or more, more preferably 11.6 mol% or more, further preferably 15 mol% or more, and particularly preferably more than 17.8 mol%. The content of the hydroxyl group of 5 mol% or more reduces a haze of the film to yield more excellent appearance.

The content of the hydroxyl group can be measured by ¹H-NMR, for example. When the hydrophilic resin is the vinyl alcohol resin, the content of the hydroxyl group can also be calculated as a proportion of the hydroxyl group in the vinyl alcohol structural unit by calculating a content of the vinyl alcohol structural unit (hereinafter, corresponding to the formula (1)) from a saponification degree.

The content of the hydrophilic resin is preferably more than 1 part by mass as a proportion relative to a total amount of the silica particles and the alkoxysilane hydrolyzed condensate ("a mass of the hydrophilic resin" / "a mass of the silica particles + a mass of the alkoxysilane hydrolyzed condensate"). When the content of the hydrophilic resin is within the above range, flexibility of the film and the dicing property become good.

The content of the hydrophilic resin is more preferably 1.5 parts by mass or more, further preferably 2.0 parts by mass or more, and particularly preferably 2.5 parts by mass or more. The upper limit is preferably 30 parts by mass or less, more preferably 25 parts by mass or less, and particularly preferably 20 parts by mass or less. The content of the hydrophilic resin of 30 parts by mass or less reduces a haze of the film to yield more excellent appearance.

The content of the hydrophilic resin is preferably 5 to 30 mass% as a proportion relative to 100 mass% of a total amount of the chain silica fine particles, the alkoxysilane hydrolyzed condensate, and the hydrophilic resin ("a mass of the hydrophilic resin" / "a mass of the chain silica fine particles + a mass of the alkoxysilane hydrolyzed condensate + a mass of the hydrophilic resin"). When the content of the hydrophilic resin is 5 mass% or more, flexibility of the film and the dicing property become good. The content is more preferably 8 mass% or more, and particularly preferably 10 mass% or more. Meanwhile, the content of 30 mass% or less reduces a haze of the film to yield more excellent appearance. The content is more preferably 25 mass% or less, and particularly preferably 20 mass% or less.

### [Polyvinyl Alcohol Resin]

In the composition of the present invention, the polyvinyl alcohol resin can be suitably used as the hydrophilic resin. As for the polyvinyl alcohol resin contained in the composition of the present invention, a specific structure thereof is not particularly limited as long as the resin has a vinyl alcohol structural unit represented by the following formula (1). The polyvinyl alcohol can be typically obtained by saponifying a polycarboxylic acid vinyl ester, which is a polymerized carboxylic acid vinyl ester monomer such as vinyl acetate, but not limited thereto.

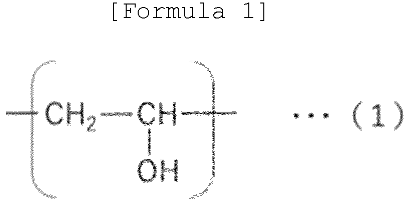

Examples of the polyvinyl alcohol resin include unmodified polyvinyl alcohol and modified polyvinyl alcohol resin. The modified polyvinyl alcohol resin may be: a copolymerization-modified polyvinyl alcohol resin synthesized by copolymerizing a monomer other than the vinyl ester monomer to provide the polyvinyl alcohol structural unit; or a post-modified polyvinyl alcohol resin in which the unmodified polyvinyl alcohol is synthesized and then the main chain or the side chain is appropriately modified with a compound.

Examples of a copolymerization monomer (unsaturated monomer) usable for the copolymerization-modified polyvinyl alcohol resin include: olefins such as ethylene, propylene, isobutylene, α-octene, α-dodecene, and α-octadecene; hydroxyl-group-containing α-olefins and acylated derivative thereof such as 3-buten-1-ol, 4-penten-1-ol, and 5-hexen-1-ol, and derivatives thereof; unsaturated acids or salts thereof such as acrylic acid, methacrylic acid, crotonic acid, maleic acid, maleic anhydride, itaconic acid, and undecenoic acid; monoesters or dialkyl esters; amides such as diacetone acrylamide, acrylamide, and methacrylamide; olefinsulfonic acids or salts thereof such as ethylenesulfonic acid, allylsulfonic acid, and methallylsulfonic acid; quaternary ammonium salts such as diallyldimethylammonium chloride and diallyldiethylammonium bromide; substituted vinyl acetates such as isopropenyl acetate and 1-methoxyvinyl acetate; allyl ethers having a poly(oxyalkylene) group such as polyethylene glycol allyl ether, methoxy polyethylene glycol allyl ether, polypropylene glycol allyl ether, and polyethylene glycol-polypropylene glycol allyl ether.

Examples of the copolymerization-modified polyvinyl alcohol resin include a polyvinyl alcohol resin having a primary hydroxyl group on the side chain. Examples of such a polyvinyl alcohol resin include polyvinyl alcohol resins having a hydroxymethyl group on the side chain obtained by copolymerizing and saponifying: side-chain 1,2-diol-modified PVA resin obtained by copolymerizing 3,4-diacetoxy-1-butene, vinyl ethylene carbonate, glycerol monoallyl ether, etc.; hydroxymethylvinylidene diacetates such as 1,3-diacetoxy-2-methylenepropane, 1,3-dipropionyloxy-2-methylenepropane, and 1,3-dibutyronyloxy-2-methylenepropane; etc.

A method for post-modification of the post-modified polyvinyl alcohol resin include a method of acetoacetate esterification, acetalization, urethanization, etherification, grafting, phosphate esterification, oxyalkylene formation, and an ester exchange reaction of the unmodified polyvinyl alcohol or the above modified polyvinyl alcohol resin. In terms of flexibility of the film, a polyvinyl alcohol resin that is caprolactone-modified with an ester exchange reaction is more preferable.

A content of the vinyl alcohol structural unit contained in the polyvinyl alcohol resin is preferably 30 to 90 mol%. When the content of the vinyl alcohol structural unit is 30 mol% or more, the flexibility and bendability of the film are improved to inhibit cracking and peeling in dicing. The content is more preferably 32 mol% or more, further preferably 35 mol% or more, and particularly preferably more than 46 mol%. Meanwhile, when the content of the vinyl alcohol structural unit is 90 mol% or less, dispersibility in the organic solvent becomes good, increase in a viscosity of the liquid is inhibited, and the obtained film has better appearance. The content is more preferably 85 mol% or less, and particularly preferably 80 mol% or less.

A functional group contained in the polyvinyl alcohol resin is preferably an oxyalkylene group, an acetoacetyl group, a carboxyl group, and a sulfoxyl group. In terms of the flexibility of the film, an oxyalkylene group is more preferably contained.

The average polymerization degree of the polyvinyl alcohol resin is not particularly limited, and preferably 200 to 2,000. When the average polymerization degree is 200 or more, the flexibility and bendability of the film are more improved. Meanwhile, when the average polymerization degree is 2000 or less, dispersibility in the organic solvent is more improved.

A content of the polyvinyl alcohol resin is preferably more than 1 part by mass relative to 100 parts by mass of a total amount of the chain silica fine particles and the alkoxysilane hydrolyzed condensate. The content of the polyvinyl alcohol resin is more preferably 1.5 parts by mass or more, further preferably 2.0 parts by mass or more, and particularly preferably 2.5 parts by mass or more. The upper limit is preferably 30 parts by mass or less, more preferably 25 parts by mass or less, and particularly preferably 20 parts by mass or less. The content of the hydrophilic resin of 30 parts by mass or less reduces a haze of the film to yield more excellent appearance. When the content of the polyvinyl alcohol resin is low, the flexibility and bendability of the film are more improved, and film cracking in dicing can be inhibited. The content of the polyvinyl alcohol resin is more preferably 5 parts by mass or more, further preferably 6 parts by mass or more, and particularly preferably 8 parts by mass or more. Meanwhile, when the content is high, dispersibility in the organic solvent becomes good, increase in a viscosity of the liquid is inhibited, and the obtained film has good appearance.

### [Film]

A first film of the present invention may be a film obtained by using the composition of the present invention. The film obtained by applying the composition of the present invention is typically used as a film applied and formed on a transparent substrate particularly when used for optical use. This film is a porous film having many pores. The film preferably has a smooth surface. The roughness step is preferably 5 nm or less, more preferably 3 nm or less, and particularly preferably 2 nm or less.

A second film of the present invention may be a film containing a hydrophilic resin and a having porosity of 10 to 80%. Since having an excellent dicing property, a low haze, and a low refractive index, the second film has high industrial utility. For the second film of the present invention, a film according to the first film of the present invention can be used, and common properties in these films will be described as the film of the present invention.

### <Refractive Index>

The refractive index of the film of the present invention is typically 1.15 or more and 1.40 or less, and appropriately selected for use according to usage. When the film is used for an antireflective film of a glass or plastics substrate, the refractive index is preferably 1.20 or more and 1.35 or less. When a single layer of the film is formed as the antireflective film, selecting the refractive index of the film depending on a refractive index of the substrate can extremely reduce a minimum reflectance to 0%. When the film is used for a total reflection film, the refractive index is preferably 1.25 or less, more preferably 1.20 or less, and particularly preferably 1.18 or less.

A lower refractive index is more preferable because of increase in a proportion of light totally reflected on an interface between the transparent substrate and the film, but meanwhile, the porosity of the film increases, and thereby mechanical strength of the film may deteriorate.

### <Structure>

The structure of the film of the present invention is not particularly limited. The pores are typically tunnels or coupling pores in which independent pores are coupled, but a detailed structure of the pores is also not particularly limited. Regulating the pore size and the porosity can regulate the refractive index, a dielectric constant, and a density, and the film can be applied for various use other than the optical use by regulating these properties. The pore size and the porosity can be regulated by a composition and a coating method of a coating liquid for film formation, described later.

The pore size of the film of the present invention is not particularly limited, and the pore size is typically preferably 0.1 to 50 nm, more preferably 1 to 20 nm, and particularly preferably 2 to 10 nm. If the pore size is extremely large, such a film is unsuitable for the antireflective film formed as a thin film with, for example, about 100 nm, defects are generated on the surface of the formed film, the surface has large roughness, and a haze may increase due to light scattering etc. Due to the many defects, such a film also has a problem of deteriorated mechanical strength.

The porosity of the film of the present invention is preferably 10 to 80%, more preferably 10 to 78%, more preferably 20 to 78%, more preferably 30 to 78%, and particularly preferably 30 to 70%. The porosity of 10% or more yields better flexibility and optical properties. Meanwhile, the porosity of 80% or less yields better mechanical strength, haze, and surface smoothness.

The pore size of the film of the present invention is measured by analyzing an observation image with a transmission electron microscope (TEM) or a scanning electron microscope (SEM).

The porosity of the film can be determined with a relational expression between the porosity and the refractive index with a Lorentz-Lorentz expression.

A thickness of the film of the present invention is preferably 50 to 20,000 nm. The thickness is more preferably 1,000 nm or more, further preferably 2,000 nm or more, and particularly preferably 3,000 nm or more. The thickness of 50 nm or more exhibits an optical effect and yields better mechanical strength. Meanwhile, the thickness of 20,000 nm or less easily uniformizes the film structure. The thickness is more preferably 19,000 nm or less, and particularly preferably 17,000 nm or less. The thickness can be measured by a method described in Examples described later.

The haze of the film of the present invention is preferably 0 to 3.0%. The haze is more preferably 2.5% or less, further preferably 2.0% or less, furthermore preferably 1.8% or less, and particularly preferably 1.0% or less. The haze of 3.0% or less yields better optical properties. The lower limit is most preferably 0%. The haze can be measured by a method described in Examples described later.

### [Method for Manufacturing Film]

Hereinafter, an example of a method for manufacturing a film of the present invention will be described, but the method for manufacturing a film of the present invention is not limited to the following method.

For forming the film of the present invention, a coating liquid for forming the film (corresponding to the composition of the present invention; hereinafter, also referred to as "coating liquid for film formation") is applied on a substrate, and then the obtained wet film is cured by heat-drying.

The coating liquid for film formation is manufactured by, for example, adding the chain silica fine particles and the hydrophilic resin into the silicate oligomer containing the alkoxysilane hydrolyzed condensate. The solvent may be appropriately contained.

### (Method for Manufacturing Coating Liquid for Film Formation)

The coating liquid for film formation is manufactured by mixing the silicate oligomer containing the alkoxysilane hydrolyzed condensate, the chain silica fine particles, and the hydrophilic resin.

The coating liquid for film formation is regulated to have an appropriate concentration with considering the coatability in application on the substrate, and the thickness and smoothness of the coating film. The concentration is regulated by adding the aforementioned hydrophilic solvent, and the concentration can be regulated before or after mixing the chain silica fine particles.

The concentration of the chain silica fine particles in the coating liquid for film formation is preferably 30 mass% or less, more preferably 25 mass% or less, particularly preferably 20 mass% or less, and most preferably 17 mass% or less. The concentration of the vf-chain silica fine particles of 30 mass% or less more improves the coatability to form the film having surface smoothness. Meanwhile, in terms of efficiency of the film formation, the concentration of the chain silica fine particles in the coating liquid for film formation is preferably 1 mass% or more, and more preferably 5 mass% or more.

A mixing ratio between the silicate oligomer containing the alkoxysilane hydrolyzed condensate and the chain silica fine particles is not particularly limited as long as the pores in the film are not blocked in forming the film by using the obtained coating liquid for film formation.

An excessively large proportion of the silicate oligomer hardly forms the pores in the film formation, and thereby the porous film having excellent optical performance, which is the original object, is hardly formed. Meanwhile, an extremely small proportion of the silicate oligomer weakens bonding between the chain silica fine particles each other, and thereby results in insufficient mechanical strength and deteriorated adhesiveness to the substrate, which may consequently cause damage or peeling depending on the post-process and use environment.

From these viewpoints, the mixing ratio between the chain silica fine particles and the alkoxysilane hydrolyzed condensate in mixing the silicate oligomer containing the alkoxysilane hydrolyzed condensate and the chain silica fine particles is preferably the chain silica fine particles : the alkoxysilane hydrolyzed condensate = 1 : 0.01 to 2 (mass ratio), and particularly preferably 1 : 0.05 to 1 (mass ratio).

A content of the hydrophilic resin in the coating liquid for film formation is preferably 0.05 mass% or more, and more preferably 0.1 mass% or more. When the content is 0.05 mass% or more, the flexibility and bendability of the film are more improved. Meanwhile, the content is preferably 10 mass% or less, and more preferably 5 mass% or less. When the content is 10 mass% or less, increase in a viscosity of the liquid is inhibited, and the obtained film has better appearance.

A solvent contained in the coating liquid for film formation is water and/or an organic solvent. The solvent preferably contains a hydrophilic solvent. The hydrophilic solvent is not particularly limited, and typically used are: alcohols such as methanol, ethanol, propanol, and butanol; cellosolves such as ethyl cellosolve, butyl cellosolve, and propyl cellosolve; and glycols such as ethylene glycol, propylene glycol, and hexylene glycol. These solvents may be used singly, or two or more thereof may be mixed for use. As these solvents, a solvent derived from a dispersion etc. of each raw material may be used, or may be mixed in preparation of the coating liquid for film formation.

### [Laminate]

The film composed of the composition of the present invention can be laminated to the substrate to form a laminate.

For the substrate to which the film is laminated, a transparent substrate such as glass and plastics is used. The transparent substrate has high light transparency with a certain specific wavelength, and appropriately selected depending on use utilizing ultraviolet light, visible light, or infrared light. The specific wavelength is not limited to the visible light range, but the laminate preferably has high transparency relative to light having a wavelength within a visible light region for use of: optical devices such as a lens, a display, a solar cell, and solar heat power generation; and an antireflective film for a building material and an interior and exterior of an automobile. The laminate having a total light transmittance of 60% or more is typically used.

A thickness and shape of the substrate are not particularly limited. The substrate may have scattering or haze, and may have fine roughness geometry on the substrate surface as long as such properties do not affect the performance of the film.

Examples of the plastics constituting the substrate include polyethylene terephthalate (PET), polyethylene naphthalate (PEN), polycarbonate (PC), polyimide (PI), polymethyl methacrylate (PMMA), and cycloolefin polymer (COP).

For the surface of the substrate, both of a modification-treated surface and an untreated surface may be applied.

### (Coating Method)

A method for laminating the film to the substrate is preferably a coating method, and examples thereof include coating methods such as a dip-coating method, a spin-coating method, a die-coating method, a spray-coating method, a gravure-coating method, a roll-coating method, a curtain-coating method, a screen printing method, and an inkjet-printing method.

### (Drying and Curing Method)

A wet film formed by applying the coating liquid for film formation on the substrate is dried in order to remove the solvent. The drying temperature is typically 50 to 80°C, and a hot-air dryer etc. is suitably used. The drying time is typically 1 to 10 minutes, and preferably 1 to 5 minutes.

When the transparent substrate is plastics, recommended as a curing treatment after the drying is a method of irradiation with ultraviolet ray in the presence of oxygen in order to impart adhesiveness. The ultraviolet ray includes near ultraviolet ray (near UV, wavelength: 200 to 380 nm), far ultraviolet ray (far UV, wavelength: 10 to 200 nm), and extreme ultraviolet ray (extreme UV, wavelength: 1 to 10 nm), and far ultraviolet ray is typically effective. Examples of a radiation source for the ultraviolet ray include a low-pressure mercury lamp, a high-pressure mercury lamp, an excimer ultraviolet ray (excimer UV) lamp, a halide lamp, and a laser. The irradiation time of the ultraviolet ray is typically 1 second to 3 minutes.

When the transparent substrate is glass etc., suitably used as the curing treatment is a hot-air dryer etc. at 80 to 150°C. The curing time is typically 1 minute to 60 minutes, and preferably 1 minute to 30 minutes.

### [Optical Member]

The optical member of the present invention can have the laminate of the present invention. The laminate itself may be the optical member, or the laminate may be used as a part of the optical member. Examples of the optical member of the present invention include a diffractive optical element (DOE), a clad material for an optical fiber, a light waveguide, an optical display, an AR glass, a camera lens, a medical lens, a microlens, and a LiDAR.

The film of the present invention can be suitably used as an antireflective film etc. The film of the present invention can be suitably used for a display, an automobile panel, a lamp for illumination, a sunlight-using device, a camera lens, a face shield, glasses, a light waveguide, etc. As the optical use, the film of the present invention can be suitably used for a diffractive optical element (DOE), a clad material for an optical fiber, a light waveguide, an optical display, an AR glass, a camera lens, a medical lens, a microlens, and a LiDAR. Further, the film of the present invention can also be suitably used for a member for improving color tone and increasing brightness of a display.

### Examples

Hereinafter, the present invention will be described in detail with Examples, but the present invention can be appropriately modified within a range not impairing the spirit of the present invention, and not limited to the following Examples.

The physical properties in Examples were measured in accordance with the following methods.

### [Average Primary-Particle Diameter of Silica Fine Particles]

An average primary-particle diameter of silica fine particles was calculated by a BET method.

### [Refractive Index and Film Thickness]

A refractive index and a film thickness of a porous silicon oxide film laminate (1) were calculated from a reflectance spectrum obtained with "Interference Film Thickness Meter F20", manufactured by Filmetrics, INC.

### [Porosity]

A porosity of the porous silicon oxide film laminate (1) was calculated with a relational expression between the porosity and the refractive index with a Lorentz-Lorentz expression. Note that used as the refractive index of the silica fine particles was a value of 1.46.

### (Lorentz-Lorentz Expression)

Porosity (%) = (Refractive index of silica fine particles - Refractive index of porous silicon oxide film)/0.46

### [Haze]

A porous silicon oxide film (2) was put under room temperature, and the haze was measured with a spectrometric color / haze meter ("COH7700", manufactured by NIPPON DENSHOKU INDUSTRIES CO., LTD.).

### [Film Formability]

Film formability in thin-film manufacturing was evaluated with the following criteria.
○: A uniform film with 2.0 µm or more in film thickness can be produced without problems.
×: A film with 2.0 µm or more in film thickness cannot be produced.

### [Dicing Property]

The porous silicon oxide film laminate (2) was put under room temperature, and cut from the glass side with a cutter equipped with a diamond cutting grindstone ("Qcut150A", manufactured by QATM GmbH). The cut cross section was observed with FE-SEM ("JSM-7900F", manufactured by JEOL Ltd.), and the cut film surface was observed with a laser microscope ("VK-9700", manufactured by KEYENCE CORPORATION) to be evaluated with the following criteria.

### (Cracking)

○: Film cracking is absent in the cross-sectional observation.
×: Film cracking is present in the cross-sectional observation.

### (Peeling Evaluation Method 1)

○: Film peeling is absent in the surface observation.
×: Film peeling is present in the surface observation.

### (Peeling Evaluation Method 2)

The porous silicon oxide film laminate (2) was put under room temperature, and scratched from the glass side with a diamond cutter. Force was equivalently applied from right and left sides of the scratch, and the laminate was manually broken along the scratch. The broken film surface was observed with a laser microscope ("VK-9700", manufactured by KEYENCE CORPORATION) to be evaluated with the following criteria.
○: Film peeling is absent in the surface observation.
△: Film peeling is partially present in the surface observation.
×: Film peeling is entirely present in the surface observation.

### [Flexibility]

A porous silicon oxide film laminate (3) was put under room temperature, and wound around a cylindrical metal rod with 1 mm in diameter with the applied film upward. The state of the specimen was observed and evaluated with the following criteria.
○: Cracking and peeling are absent on the film
×: Cracking is present on the film, and the wound part is peeled.

### [Manufacturing Example 1] Manufacture of Silicate Oligomer (A) Containing Alkoxysilane Hydrolyzed Condensate

(1) Hydrolysis Reaction Step:
   Into a 500-mL reaction vessel equipped with a jacket, 5 pars by mass of "KBM22", a product by Shin-Etsu Silicone Co., Ltd. (content of dimethyldimethoxysilane: 99 mass%), 20 parts by mass of "Silicate MS51", a product by Mitsubishi Chemical Corporation (average polymerization degree "n": 7, content of methyl silicate oligomer: 99.8 mass%), and 50 parts by mass of ethanol were fed. An upper limit temperature in the reaction was set to 40°C, and under a stirring condition, 33 parts by mass of a hydrochloric acid aqueous solution at 0.007 mass% was added dropwise over 10 minutes. At this time, the reaction temperature rose by 5 to 10°C due to the exothermic reaction. The stirring was continued until the reaction temperature lowered by 5 to 10°C. A proportion of the polymer of the hydrolysable silane compound in the total amount of the bifunctional hydrolysable silane compound and the polymer of the hydrolysable silane compound (a proportion of "Silicate MS51" relative to the total amount of "KBM22" and "Silicate MS51") was 80 mass%.
(2) Condensation Reaction Step:
   After the dropwise addition of the hydrochloric acid aqueous solution, under a stirring condition, the temperature was raised to 60°C over 30 minutes, and held at 60°C for 30 minutes. Thereafter, the temperature was lowered to room temperature.
(3) Condensation-Reaction Termination Step:
   After the cooling, 108 parts by mass of ethanol was mixed, and the mixture was stirred for 30 minutes to obtain 216 parts by mass of a silicate oligomer (A) containing the alkoxysilane hydrolyzed condensate. In the obtained silicate oligomer (A) containing the alkoxysilane hydrolyzed condensate, a concentration of the alkoxysilane hydrolyzed condensate was 15%, and the weight-average molecular weight was 1949.

### [Manufacturing Example 2] Manufacture of Silicate Oligomer (B) Containing Alkoxysilane Hydrolyzed Condensate

Into 100 parts by mass of the silicate oligomer (A) containing the alkoxysilane hydrolyzed condensate, 50 parts by mass of ethanol was added, and the mixture was stirred for 30 minutes to obtain 150 parts by mass of a silicate oligomer (B) containing the alkoxysilane hydrolyzed condensate.

### [Manufacturing Example 3] Manufacture of Coating Liquid (C) for Forming Porous Silicon Oxide Film

Into 150 parts by mass of the silicate oligomer (B) containing the alkoxysilane hydrolyzed condensate, 97 parts by mass of chain silica fine particles ("SNOWTEX OUP", a product manufactured by Nissan Chemical Industries, Ltd., average primary-particle diameter: 12 nm, average length: 40 to 100 nm, silica fine particle concentration: 15 mass%) and 268 parts by mass of chain silica fine particles ("Organo Silica Sol MEK-ST-UP", a product manufactured by Nissan Chemical Industries, Ltd., average primary-particle diameter: 12 nm, average length: 40 to 100 nm, silica fine particle concentration: 20 mass%) were added, and the mixture was stirred for 30 minutes to obtain 515 parts by mass of a coating liquid (C) for forming a porous silicon oxide film.

### [Example 1]

Into 100 parts by mass of the coating liquid (C) for forming a porous silicon oxide film, 3.75 parts by mass of oxyalkylene-group-modified polyvinyl alcohol ("GOHSENX LW-100", a product manufactured by Mitsubishi Chemical Corporation, concentration: 40 mass%, saponification degree: 39 to 46 mol%, polymerization degree: 200) was added, and the mixture was stirred for 30 minutes to manufacture and evaluate 103.75 parts by mass of a coating liquid (D) for forming a porous silicon oxide film of the present invention. Table 1 shows the results.

### [Example 2]

Manufactured and evaluated was 107.50 parts by mass of a coating liquid (D) for forming a porous silicon oxide film in the same manner as in Example 1 except that the amount of the oxyalkylene-group-modified polyvinyl alcohol ("GOHSENX LW-100", a product manufactured by Mitsubishi Chemical Corporation, concentration: 40 mass%, saponification degree: 39 to 46 mol%, polymerization degree: 200) added was changed to 7.50 parts by mass. Table 1 shows the results.

### [Example 3]

Manufactured and evaluated was 107.50 parts by mass of a coating liquid (D) for forming a porous silicon oxide film in the same manner as in Example 1 except that: 7.50 parts by mass of CL-modified PVOH ("GOHSENOL NM-11Q", manufactured by Mitsubishi Chemical Corporation, saponification degree: 99.1 mol%, polymerization degree: 1200 was caprolactone-modified at 52 mol% in the present of a Lewis acid and then diluted with ethanol to 10 wt%) was used instead of the oxyalkylene-group-modified polyvinyl alcohol ("GOHSENX LW-100", a product manufactured by Mitsubishi Chemical Corporation, concentration: 40 mass%, saponification degree: 39 to 46 mol%, polymerization degree: 200). Table 1 shows the results.

### [Example 4]

Manufactured and evaluated was 115.00 parts by mass of a coating liquid (D) for forming a porous silicon oxide film in the same manner as in Example 1 except that 15.00 parts by mass of CL-modified PVOH ("GOHSENOL NM-11Q", manufactured by Mitsubishi Chemical Corporation, saponification degree: 99.1 mol%, polymerization degree: 1200 was caprolactone-modified at 52 mol% in the present of a Lewis acid and then diluted with ethanol to 10 wt%) was used instead of the oxyalkylene-group-modified polyvinyl alcohol ("GOHSENX LW-100", a product manufactured by Mitsubishi Chemical Corporation, concentration: 40 mass%, saponification degree: 39 to 46 mol%, polymerization degree: 200). Table 1 shows the results.

### [Example 5]

Manufactured and evaluated was 103.75 parts by mass of a coating liquid (D) for forming a porous silicon oxide film in the same manner as in Example 1 except that 3.75 parts by mass of an oxyalkylene-group-modified polyvinyl alcohol ("GOHSENX LW-200", a product manufactured by Mitsubishi Chemical Corporation, concentration: 40 mass%, saponification degree: 39 to 46 mol%, polymerization degree: 200) was used instead of the oxyalkylene-group-modified polyvinyl alcohol ("GOHSENX LW-100", a product manufactured by Mitsubishi Chemical Corporation, concentration: 40 mass%, saponification degree: 46 to 53 mol%, polymerization degree: 200). Table 1 shows the results.

### [Example 6]

Manufactured and evaluated was 104.50 parts by mass of a coating liquid (D) for forming a porous silicon oxide film in the same manner as in Example 1 except that 4.50 parts by mass of polyvinyl alcohol ("GOHSENOL NK-05R", a product manufactured by Mitsubishi Chemical Corporation, concentration: 10 mass%, saponification degree: 71 to 75 mol%, polymerization degree: 500) was used instead of the oxyalkylene-group-modified polyvinyl alcohol ("GOHSENX LW-100", a product manufactured by Mitsubishi Chemical Corporation, concentration: 40 mass%, saponification degree: 46 to 53 mol%, polymerization degree: 200). Table 1 shows the results.

### [Example 7]

Manufactured and evaluated was 107.50 parts by mass of a coating liquid (D) for forming a porous silicon oxide film in the same manner as in Example 5 except that 7.50 parts by mass of polyvinyl alcohol ("GOHSENOL NK-05R", a product manufactured by Mitsubishi Chemical Corporation, concentration: 10 mass%, saponification degree: 71 to 75 mol%, polymerization degree: 500) was used. Table 1 shows the results.

### [Example 8]

Manufactured and evaluated was 115.00 parts by mass of a coating liquid (D) for forming a porous silicon oxide film in the same manner as in Example 5 except that 15.00 parts by mass of polyvinyl alcohol ("GOHSENOL NK-05R", a product manufactured by Mitsubishi Chemical Corporation, concentration: 10 mass%, saponification degree: 71 to 75 mol%, polymerization degree: 500) was used. Table 1 shows the results.

### [Comparative Example 1]

A coating liquid for forming a porous silicon oxide film was manufactured and evaluated in the same manner as in Example 1 except that, in Example 1, the oxyalkylene-group-modified polyvinyl alcohol was not added into the coating liquid (C) for forming a porous silicon oxide film. Table 1 shows the results.

### [Comparative Example 2]

A coating liquid for forming a porous silicon oxide film was manufactured and evaluated in the same manner as in Comparative Example 1 except that a mixture in which 340.75 parts by mass of spherical silica fine particles ("SNOWTEX OS", a product manufactured by Nissan Chemical Industries, Ltd., average primary-particle diameter: 9 nm, silica fine particle concentration: 20 mass%) was diluted with 24.25 parts by mass of ethanol was used instead of 97 parts by mass of the chain silica fine particles ("SNOWTEX OUP", a product manufactured by Nissan Chemical Industries, Ltd., average primary-particle diameter: 12 nm, average length: 40 to 100 nm, silica fine particle concentration: 15 mass%) and 268 parts by mass of the chain silica fine particles ("Organo Silica Sol MEK-ST-UP", a product manufactured by Nissan Chemical Industries, Ltd., average primary-particle diameter: 12 nm, average length: 40 to 100 nm, silica fine particle concentration: 20 mass%). Table 1 shows the results. Comparative Example 2 had problems of film formability etc. and the values of the refractive index and the porosity failed to be clearly specified, and thereby the results are described as "unmeasurable" in Table 1.

### [Comparative Example 3]

A coating liquid (E) for forming a porous silicon oxide film was manufactured in the same manner as in Example 3 except that a mixture in which 340.75 parts by mass of spherical silica fine particles ("SNOWTEX OS", a product manufactured by Nissan Chemical Industries, Ltd., average primary-particle diameter: 9 nm, silica fine particle concentration: 20 mass%) was diluted with 24.25 parts by mass of ethanol was used instead of 97 parts by mass of the chain silica fine particles ("SNOWTEX OUP", a product manufactured by Nissan Chemical Industries, Ltd., average primary-particle diameter: 12 nm, average length: 40 to 100 nm, silica fine particle concentration: 15 mass%) and 268 parts by mass of the chain silica fine particles ("Organo Silica Sol MEK-ST-UP", a product manufactured by Nissan Chemical Industries, Ltd., average primary-particle diameter: 12 nm, average length: 40 to 100 nm, silica fine particle concentration: 20 mass%). Then, a coating liquid for forming a porous silicon oxide film was manufactured and evaluated in the same manner as in Example 6 except that the obtained coating liquid (E) for forming a porous silicon oxide film was used instead of the coating liquid (C) for forming a porous silicon oxide film. Table 1 shows the results.

### [Production of Porous Silicon Oxide Film Laminate (1) (for Evaluating Refractive Index and Porosity)]

A 6-inch Si wafer (manufactured by Advanced Materials Technology, Inc.) was cut to 2 cm, the coating liquid for forming a porous silicon oxide film obtained above was added dropwise, and coating was performed with a spin coater ("MS-A150", manufactured by Mikasa Co., Ltd.) at 3500 rpm for 30 seconds to produce a thin film.

Thereafter, to remove the solvent and thermally cure the film, the thin film was put in a low-temperature constant-temperature blower (manufactured by Yamato Scientific Co., Ltd.), and dried at 120°C for 10 minutes to obtain a laminate (1) with 3.5 µm in thickness of the porous silicon oxide film and the Si wafer. The obtained porous silicon oxide laminate (1) was used to measure the refractive index and the porosity. Table 1 shows the obtained evaluation results.

### [Production of Porous Silicon Oxide Film Laminate (2) (for Evaluating Dicing and Haze)]

On a slide glass plate with 1 mm in thickness ("S9111", manufactured by Matsunami Glass Ind., Ltd.), the coating liquid for forming a porous silicon oxide film obtained above was added dropwise, and coating was performed with a spin coater ("MS-A150", manufactured by Mikasa Co., Ltd.) at 2000 rpm for 30 seconds to produce a thin film.

Thereafter, to remove the solvent and thermally cure the film, the thin film was put in a low-temperature constant-temperature blower (manufactured by Yamato Scientific Co., Ltd.), and dried at 120°C for 10 minutes to obtain a laminate (2) with 4.5 µm in thickness of the porous silicon oxide film and the glass plate. The obtained porous silicon oxide laminate (2) was used to evaluate the dicing property and the haze. Table 1 shows the obtained evaluation results.

### [Production of Porous Silicon Oxide Film Laminate (3) (for Evaluating Flexibility)]

On an acryl sheet with 0.3 mm in thickness ("Technolloy S000", manufactured by SUMIKA ACRYL CO., LTD.), the coating liquid for forming a porous silicon oxide film obtained above was added dropwise, and coating was performed with a spin coater ("MS-A150", manufactured by Mikasa Co., Ltd.) at 2000 rpm for 30 seconds to produce a thin film.

Thereafter, to remove the solvent and thermally cure the film, the thin film was put in a low-temperature constant-temperature blower (manufactured by Yamato Scientific Co., Ltd.), and dried at 70°C for 10 minutes to obtain a laminate (3) with 4.5 µm in thickness of the porous silicon oxide film and the acryl sheet. The obtained porous silicon oxide laminate (3) was used to evaluate the flexibility. Table 1 shows the obtained evaluation results.

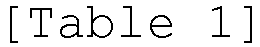

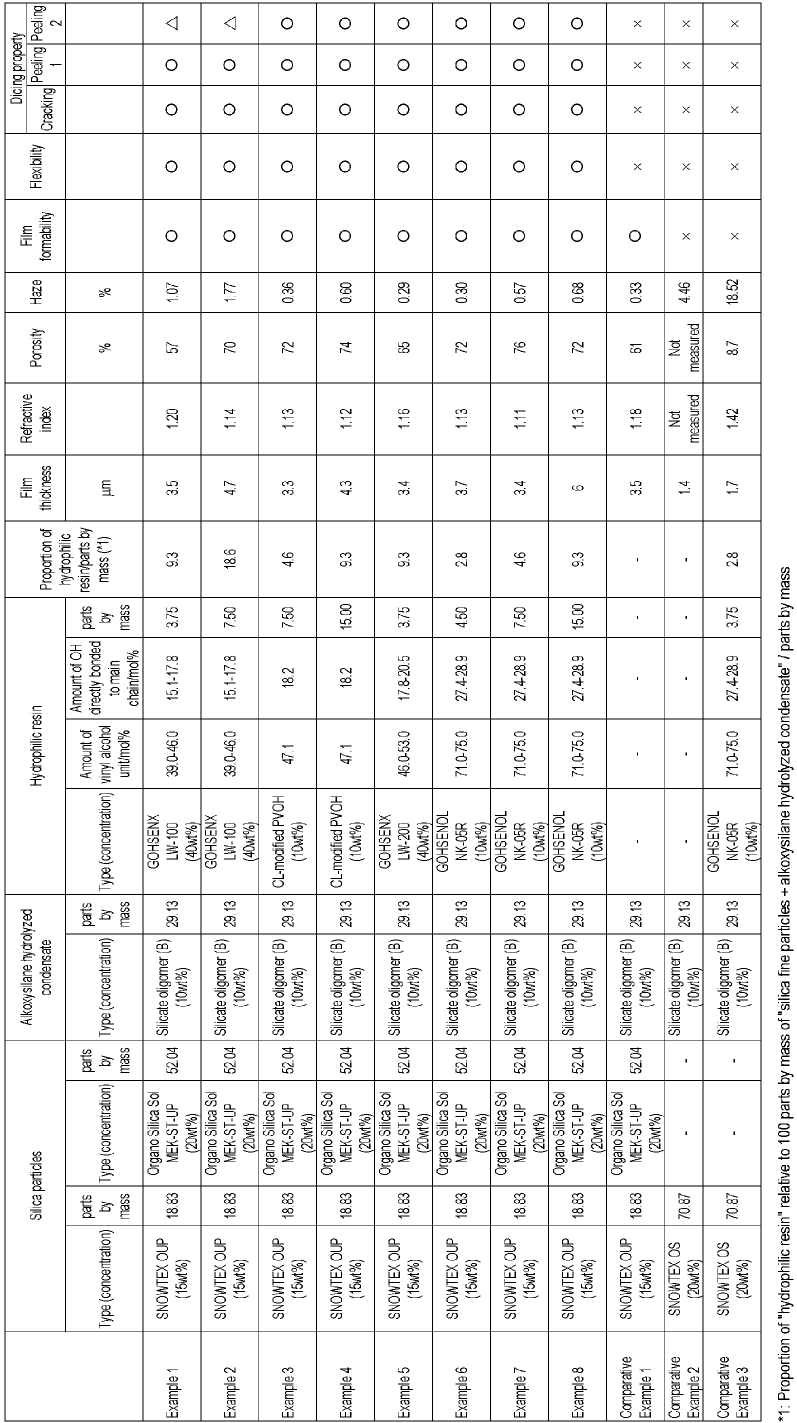

From the results of the present Examples, it is found that the films and laminates composed of the composition of the present invention described in Examples 1 to 8 have excellent flexibility, and can inhibit film cracking and peeling in the dicing. The films had low refractive index and haze, and were excellence in the optical properties.

The film of Comparative Example 1 did not contain the hydrophilic resin in the composition, and thereby caused insufficient flexibility and cracking or peeling in the dicing.

The film of Comparative Example 2 uses the spherical silica fine particles instead of the chain silica fine particles, contains no hydrophilic resin, and causes poor film formability, flexibility, and dicing property. The film had high haze, and was also poor in the optical properties.

Comparative Example 3 uses the spherical silica fine particles instead of the chain silica fine particles, and causes poor film formability, flexibility, and dicing property. The film had high haze, and was also poor in the optical properties. The film had high haze and refractive index, and is also poor in the optical properties. Further, the porosity was low.

### Industrial Applicability

The porous silicon oxide film and the laminate composed of the composition of the present invention have high flexibility and can inhibit occurrence of cracking and peeling in the dicing, and therefore, suitably used for optical members such as a diffractive optical element (DOE), a clad material for an optical fiber, a light waveguide, an optical film, an AR glass, a camera lens, a medical lens, a microlens, and a LiDAR. Specifically, the porous silicon oxide film and the laminate can be effectively applied for use requiring size reduction and followability of a part.

## Claims

1. A composition, comprising:
chain silica fine particles;
an alkoxysilane hydrolyzed condensate; and
a hydrophilic resin.

2. The composition according to claim 1, wherein the hydrophilic resin has a hydroxyl group.

3. The composition according to claim 1 or 2, wherein a content of a hydroxyl group directly bonded to a main chain of the hydrophilic resin is 35 mol% or less.

4. The composition according to any one of claims 1 to 3, wherein a content of the hydrophilic resin is more than 1 part by mass relative to 100 parts by mass of a total amount of the chain silica fine particles and the alkoxysilane hydrolyzed condensate.

5. The composition according to any one of claims 1 to 4, wherein a content of the alkoxysilane hydrolyzed condensate is 5 to 30 mass% relative to 100 mass% of a total amount of the chain silica fine particles, the alkoxysilane hydrolyzed condensate, and the hydrophilic resin.

6. The composition according to any one of claims 1 to 5, wherein a content of the chain silica fine particles is 60 to 90 mass% relative to 100 mass% of a total amount of the chain silica fine particles, the alkoxysilane hydrolyzed condensate, and the hydrophilic resin.

7. The composition according to any one of claims 1 to 6, wherein the alkoxysilane hydrolyzed condensate has a weight-average molecular weight of 1,000 to 5,000.

8. The composition according to any one of claims 1 to 7, wherein the chain silica fine particles have an average primary-particle diameter of 5 to 100 nm.

9. The composition according to any one of claims 1 to 8, wherein the hydrophilic resin has an average polymerization degree of 200 to 2,000.

10. A film, comprising the composition according to any one of claims 1 to 9.

11. A film, comprising a hydrophilic resin, wherein the film has a porosity of 10 to 80%.

12. The film according to claim 10 or 11, wherein the film has a thickness of 3,000 nm to 20,000 nm.

13. The film according to claim 10 or 12, wherein the film has a porosity of 10 to 80%.

14. The film according to any one of claims 10 to 13, wherein the film has a refractive index of 1.15 to 1.40.

15. The film according to any one of claims 10 to 14, wherein the film has a pore size of 0.1 to 50 nm.

16. A laminate of the film according to any one of claims 10 to 15 and a substrate.

17. The laminate according to claim 16, wherein the substrate is glass.

18. An optical member, comprising the laminate according to claim 17.
